# FASCICULE DE BREVET EUROPEEN

(11) **EP 4 159 623 B1**
(45) Date de publication et mention de la délivrance du brevet: **09.12.2026**
(21) Numéro de dépôt: 22196492.7
(22) Date de dépôt: 20.09.2022
(51) Int. Cl.: B64D 11/00, B64D 11/06

(54) **DISPOSITIF DE COMMUNICATION DE DONNÉES ET D'ALIMENTATION ELECTRIQUE SANS CONTACT, EN PARTICULIER POUR UN AÉRONEF**
VORRICHTUNG ZUR KONTAKTLOSEN DATENKOMMUNIKATION UND STROMVERSORGUNG, INSBESONDERE FÜR EIN FLUGZEUG
CONTACTLESS POWER SUPPLY AND DATA COMMUNICATION DEVICE, PARTICULARLY FOR AN AIRCRAFT

(30) Priorité: 29.09.2021 FR 2110261
(43) Date de publication de la demande: 05.04.2023
(73) Titulaire: Airbus SAS, 31700 Blagnac (FR); Airbus Operations SAS, 31060 Toulouse (FR)
(72) Inventeur: GOULLEY, Frédéric, 31060 TOULOUSE (FR); MARQUISE, Jean-Michel, 31060 TOULOUSE (FR); JURBERT, Cédric, 31700 BLAGNAC (FR); SICK, Frédéric, 31060 TOULOUSE (FR)
(74) Mandataire: Gevers & Orès

(56) Documents cités:
- EP-A2- 0 718 945
- US-A1- 2019 349 082
- US-A1- 2020 322 048
- US-B2- 10 494 098

## Description

### DOMAINE TECHNIQUE

La présente invention concerne un dispositif de communication de données et d'alimentation électrique, en particulier pour un aéronef et notamment pour des sièges de l'aéronef, ainsi qu'un aéronef pourvu d'un tel dispositif.

### ETAT DE LA TECHNIQUE

Les sièges d'un aéronef, en particulier les sièges des passagers d'un avion de transport, sont généralement munis de plusieurs accessoires destinés au confort des passagers, à la communication d'informations ou encore à la sécurité. En particulier, les sièges d'un avion de transport sont, en général, pourvus d'écrans multifonction, notamment pour le divertissement ou la transmission d'informations, et de prises pour brancher des appareils électroniques. Par ailleurs, le développement de sièges intelligents et connectés dans les aéronefs a pour conséquence de multiplier le nombre de ces accessoires.

Afin de fonctionner, la plupart de ces accessoires ont besoin d'être alimentés en énergie et d'échanger des données avec des systèmes de l'aéronef. A cet effet, des harnais de câbles sont généralement installés dans le plancher de l'aéronef et les accessoires des sièges sont liés à ces harnais pour l'alimentation électrique et la connexion à un réseau de communication de données de l'aéronef.

Cette solution n'est pas complètement satisfaisante puisqu'elle nécessite une installation de harnais dans le plancher de l'aéronef, qui est complexe et coûteuse. De plus, une telle installation rend difficile une reconfiguration d'une cabine d'un aéronef, comprenant une modification de la position d'au moins certains des sièges.

Par ailleurs, on connaît, par le document US 2019/349082 A1, un dispositif de communication sans contact intégré dans le plancher d'un aéronef, qui n'est pas complètement satisfaisant non plus.

### EXPOSÉ DE L'INVENTION

La présente invention a pour objet de proposer une solution permettant de remédier à l'inconvénient précité.

Pour ce faire, elle concerne un dispositif de communication de données et d'alimentation électrique, en particulier pour un aéronef et notamment pour des sièges de l'aéronef.

Le dispositif comporte au moins :
- une première unité de communication destinée à être agencée dans une paroi de l'aéronef et une seconde unité de communication destinée à être agencée dans un siège selon la revendication 1.

Ainsi, grâce à l'invention, on dispose d'un dispositif de communication de données et d'alimentation électrique qui est sans contact, ledit dispositif permettant notamment de communiquer des données par la lumière visible et de transmettre une alimentation électrique par induction à des sièges d'un aéronef. Un tel dispositif ne nécessite donc pas de harnais passant par le plancher de l'aéronef. Ceci simplifie la mise en place du dispositif de communication de données et d'alimentation électrique et facilite une reconfiguration d'une cabine de l'aéronef, comprenant une modification de la position d'au moins certains des sièges, puisque les sièges ne sont plus liés physiquement à des harnais.

Dans un mode de réalisation particulier, la goulotte est agencée sur la paroi de l'aéronef, ladite paroi délimitant un côté latéral d'une cabine dudit aéronef.

Avantageusement, la goulotte comporte une pluralité de connecteurs agencés le long de ladite goulotte, chaque connecteur étant configuré pour qu'au moins un premier module de transmission puisse y être connecté.

De plus, le dispositif comporte au moins un cache pourvu d'au moins une zone translucide, et configuré pour pouvoir être monté sur la goulotte. Dans un mode de réalisation préféré, le cache est configuré pour être monté sur la goulotte par des clips.

Par ailleurs, le dispositif comporte au moins un élément de protection configuré pour empêcher un accès à un espace situé entre le premier module de transmission et le second module de transmission.

La présente invention concerne également un système de communication de données et d'alimentation électrique pour un aéronef selon la revendication 7.

La présente invention concerne également un aéronef, en particulier un avion de transport, comportant au moins un dispositif de communication de données et d'alimentation électrique, tel que celui décrit ci-dessus, et/ou au moins un système de communication de données et d'alimentation électrique, tel que celui décrit ci-dessus.

### BRÈVE DESCRIPTION DES FIGURES

Les figures annexées feront bien comprendre comment l'invention peut être réalisée. Sur ces figures, des références identiques désignent des éléments semblables.
La figure 1 est une vue, en perspective, d'un premier module de transmission et d'un second module de transmission d'un dispositif de communication de données et d'alimentation électrique.
La figure 2 est une vue en perspective d'une goulotte destinée à recevoir un premier module de transmission.
La figure 3 est une vue en perspective d'un cache pourvu de clips, qui est destiné à être agencé sur la goulotte de la figure 2.
La figure 4 est une vue en perspective d'une partie d'une cabine d'un aéronef comprenant une rangée de sièges et une paroi, pourvue d'un dispositif de communication de données et d'alimentation électrique.
La figure 5 est un schéma synoptique d'un mode de réalisation particulier d'un système de communication de données et d'alimentation électrique de l'aéronef.
La figure 6 est une vue schématique d'un aéronef comportant un système de communication de données et d'alimentation électrique.

### DESCRIPTION DÉTAILLÉE

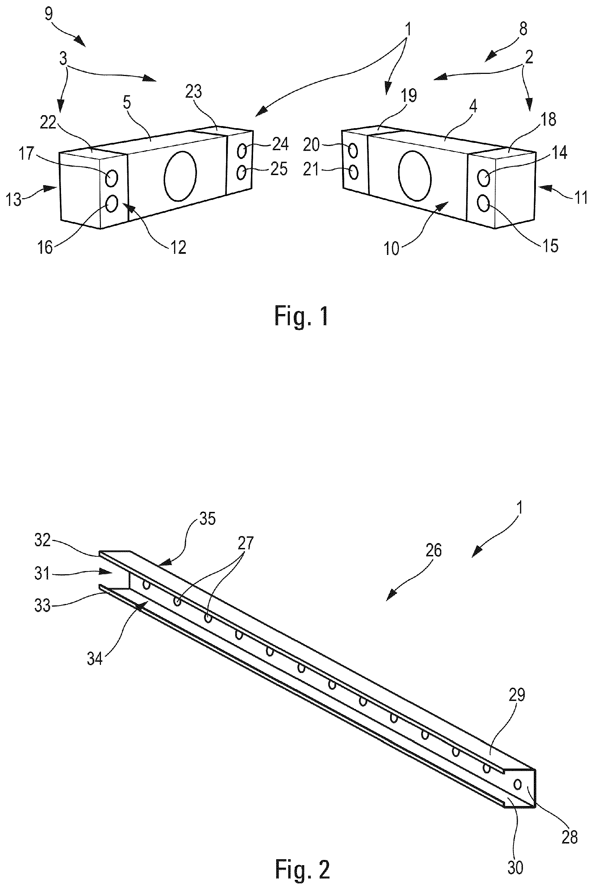

Le dispositif 1, selon l'invention et dont une forme de réalisation est représentée schématiquement sur la figure 1, est un dispositif de communication de données et d'alimentation électrique sans contact. Ce dispositif 1 est destiné à être agencé dans un aéronef afin de transmettre des données ainsi que de l'énergie électrique à des équipements dudit aéronef, notamment à des équipements montés sur des sièges, en particulier sur des sièges de passagers d'un avion de transport. Toutefois, le dispositif 1 peut être adapté à tout type de véhicule comportant des équipements nécessitant une alimentation électrique et une transmission de données.

A cet effet, le dispositif 1 comporte au moins :
- une première unité de communication 2 et une seconde unité de communication 3 aptes à coopérer ensemble afin de communiquer des données, sans fil, via la lumière visible ; et
- un émetteur à induction 4 et un récepteur à induction 5 aptes à coopérer ensemble afin de transmettre une puissance électrique par induction.

Dans le cadre de la présente invention, la communication de données via « la lumière visible » ou via « des signaux lumineux » fait référence à l'ensemble des technologies de communication sans fil reposant sur l'utilisation de la lumière visible, à savoir de longueur d'onde comprise entre 480nm et 650nm, également appelées « VLC » (pour « Visible Light Communication » en anglais). De manière préférée, les unités de communication 2 et 3 communiquent des données via la technologie « Li-Fi » (pour « Light Fidelity » en anglais) qui utilise le codage et l'échange de données par modulation d'amplitude lumineuse.

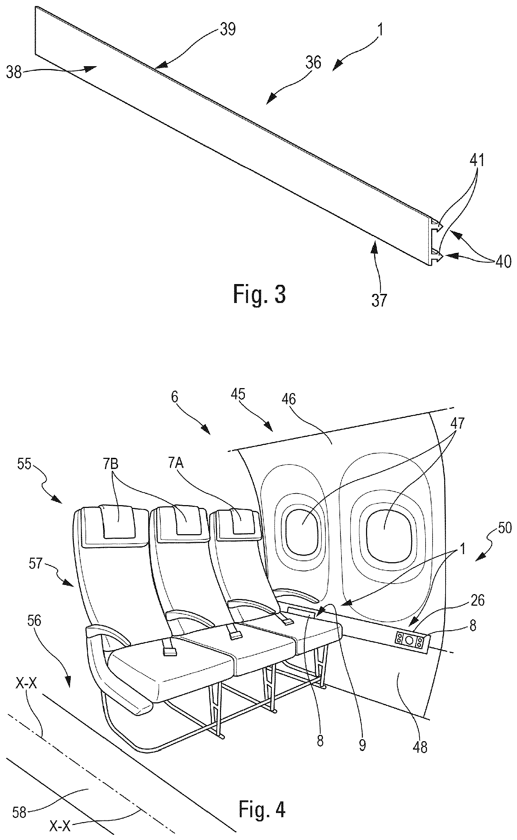

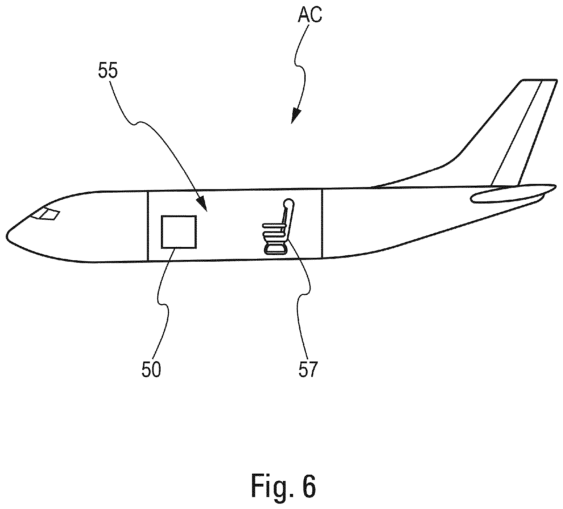

Le dispositif 1 est configuré pour permettre une transmission de données et d'alimentation électrique depuis une paroi de l'aéronef AC (figure 6) vers au moins un siège dudit aéronef AC. Pour ce faire, l'unité de communication 2 et l'émetteur à induction 4 sont agencés dans une paroi 6 (figure 4) de l'aéronef et l'unité de communication 3 et le récepteur à induction 5 sont agencés dans un siège 7A (figure 4) dudit aéronef.

Les unités de communication 2 et 3 comportent, chacune, au moins un composant d'émission et/ou au moins un composant de réception de manière à pouvoir échanger des données de façon bidirectionnelle, c'est-à-dire dans les deux sens, de l'unité de communication 2 vers l'unité de communication 3 et de l'unité de communication 3 vers l'unité de communication 2. De préférence, le composant d'émission correspond à une microdiode électroluminescente (souvent abrégée en micro DEL ou en micro LED pour « micro Light Emitting Diode » en anglais) qui est apte à être modulée à très haute fréquence, et le composant de réception correspond à un photorécepteur apte à capter les signaux modulés générés par la microdiode électroluminescente. Dans le reste de la description, on utilisera le terme « microdiode » seul pour faire référence à une telle microdiode électroluminescente.

En outre, l'émetteur à induction 4 et le récepteur à induction 5 comportent chacun une bobine, de préférence une bobine flexible. Ces bobines sont aptes à transmettre, de façon usuelle, une puissance électrique par induction de l'émetteur à induction 4 vers le récepteur à induction 5.

Les unités de communication 2 et 3 sont agencées de manière à pouvoir communiquer, de façon usuelle, des données via des signaux lumineux. On considère que lesdites unités de communication 2 et 3 sont aptes à communiquer entre elles lorsqu'elles sont disposées face à face et qu'au moins l'un des composants d'émission de l'une des unités de communication est en regard de l'un des composants de réception de l'autre unité de communication. De préférence, la distance entre les unités de communication 2 et 3 est de l'ordre de quelques centimètres.

De même, l'émetteur à induction 4 et le récepteur à induction 5 sont agencés de sorte que l'émetteur à induction 4 puisse transmettre, de façon usuelle, une puissance électrique par induction au récepteur à induction 5. Pour ce faire, l'émetteur à induction 4 est agencé en regard du récepteur à induction 5, à une distance de quelques centimètres au maximum.

Dans un mode de réalisation préféré, représenté sur la figure 1, le dispositif 1 comporte un premier module de transmission 8 correspondant à un (unique) bloc structurel (c'est-à-dire à une seule pièce). Ce premier module de transmission 8 comprend l'unité de communication 2 et l'émetteur à induction 4. De même, le dispositif 1 comporte un second module de transmission 9 correspondant également à un (unique) bloc structurel (c'est-à-dire à une seule pièce). Ce second module de transmission 9 comprend l'unité de communication 3 et le récepteur à induction 5.

Les modules de transmission 8 et 9 peuvent, par exemple, correspondre à des boîtiers configurés pour recevoir au moins une unité de communication 2 ou 3 (qui peuvent être identiques), ainsi que soit un émetteur à induction 4 soit un récepteur à induction 5.

De plus, le module de transmission 8 est agencé dans la paroi 6 de l'aéronef, comme représenté sur la figure 4, et le module de transmission 9 est agencé dans le siège 7A, siège se trouvant dans une rangée au plus proche de ladite paroi 6. En particulier, les modules de transmission 8 et 9 sont agencés en regard l'un de l'autre de sorte que, à la fois :
- les unités de communication 2 et 3 sont aptes à échanger des données ; et
- l'émetteur à induction 4 est apte à transmettre de l'énergie au récepteur à induction 5 pour une alimentation électrique.

Dans le mode de réalisation particulier représenté sur la figure 1, les modules de transmission 8 et 9 présentent une forme de parallélépipède rectangle. Chacun desdits modules de transmission 8 et 9 est pourvu d'une face dite « avant » et d'une face dite « arrière ». Le module de transmission 8 est pourvu d'une face avant 10 et d'une face arrière 11, et le module de transmission 9 est pourvu d'une face avant 12 et d'une face arrière 13. Les faces avant 10 et 12 sont les faces destinées à être agencées en regard l'une de l'autre, tandis que les faces arrière 11 et 13 sont les faces destinées à être fixées, respectivement, sur la paroi 6 et le siège 7. Les faces arrière 11 et 13 sont, notamment, destinées à permettre de réaliser l'interface entre les modules de transmission 8 et 9 et des systèmes de l'aéronef, comme précisé ci-après.

La paroi 6 comporte un élément rapporté apte à recevoir le module de transmission 8. Cet élément rapporté correspond à une goulotte telle que décrite ci-après. Toutefois, dans un autre mode de réalisation (non représenté), le module de transmission 8 est fixé directement sur la paroi 6 au moyen d'éléments de fixation, par exemple par de la colle ou des vis. Dans une variante de réalisation (non représentée), le module de transmission 8 peut être encastré dans un logement prévu à cet effet dans la paroi 6.

En outre, dans un mode de réalisation particulier (non représenté), le module de transmission 9 est fixé sur le siège 7A au moyen d'un élément de fixation, par exemple par de la colle ou des vis. Dans une variante de réalisation (non représentée), il peut être directement intégré dans le siège 7, par exemple grâce à un logement prévu à cet effet dans lequel il est monté.

Dans le mode de réalisation préféré, représenté sur la figure 1, l'unité de communication 2 comporte une microdiode 14 et un photorécepteur 15, et l'unité de communication 3 comporte une microdiode 16 et un photorécepteur 17. De plus, lesdites unités de communication 2 et 3 sont configurées de sorte que la microdiode 14 est apte à émettre des données sous forme de signaux lumineux vers le photorécepteur 17, que ce dernier est apte à détecter. De même, la microdiode 16 est apte à émettre des données sous forme de signaux lumineux vers le photorécepteur 15, que ce dernier est apte à détecter.

Les unités de communication 2 et 3 comportent, chacune, une pluralité de microdiodes ainsi qu'une pluralité de photorécepteurs. En outre, chaque microdiode d'une unité de communication 2, 3 est apte à émettre des signaux à au moins un photorécepteur de l'autre unité de communication. Réciproquement, chaque photorécepteur d'une unité de communication est apte à détecter des signaux émis par au moins l'une des microdiodes de l'autre unité de communication.

Par ailleurs, les unités de communication 2 et 3 comportent chacune une pluralité d'ensembles comprenant chacun au moins une microdiode et au moins un photorécepteur.

Dans le mode de réalisation représenté sur la figure 1, l'unité de communication 2 comporte un premier ensemble 18 comprenant la microdiode 14 et le photorécepteur 15, et un second ensemble 19 comprenant une microdiode 20 et un photorécepteur 21. De plus, l'unité de communication 3 comporte également un premier ensemble 22 comprenant la microdiode 16 et le photorécepteur 17, et un second ensemble 23 comprenant une microdiode 25 et un photorécepteur 24.

Dans ce mode de réalisation, les ensembles 18 et 22 et les ensembles 19 et 23 peuvent être utilisés différemment.

Dans une première mise en œuvre, les ensembles 18 et 22 sont destinés au fonctionnement des unités de communication 2 et 3 dans un contexte habituel, tandis que les ensembles 19 et 23 sont destinés à une fonction de redondance. Ainsi, dans un mode de fonctionnement normal, seul les ensembles 18 et 22 fonctionnent, à savoir échangent des données, tandis que les ensembles 19 et 23 sont en veille, à savoir sont alimentés mais n'échangent pas de données. Dans un mode de défaillance, c'est-à-dire dans le cas où au moins l'un des ensembles 18 ou 22 ne fonctionne pas correctement, les ensembles 19 et 23 sont mis en fonctionnement. Une telle mise en œuvre permet d'éviter une coupure des communications dans le cas d'une défaillance de ce type.

Dans une seconde mise en œuvre, les ensembles 18 et 22 et les ensembles 19 et 23 fonctionnement simultanément. Une telle mise en œuvre permet de communiquer une grande quantité de données rapidement. Dans un mode de réalisation particulier, cette mise en œuvre est utilisée ponctuellement pour optimiser la rapidité de la transmission de données. Par exemple, dans un régime normal, seul les ensembles 18 et 22 fonctionnent et dans un régime particulier nécessitant le transfert d'une grande quantité de données, les ensembles 19 et 23 sont mis en fonctionnement, en parallèle des ensembles 18 et 22, afin de pouvoir communiquer plus de données rapidement.

En outre, les faces arrière 11 et 13 des modules de transmission 8 et 9 sont pourvues de connecteurs (non représentés). Ces connecteurs peuvent correspondre à des éléments de connexion usuels, de type mâle ou femelle, tels que des fiches ou des prises électriques. Ils sont configurés pour pouvoir être connectés à des connecteurs coopérant qui sont prévus à cet effet dans la paroi 6 et le siège 7A de manière à permettre une transmission pour les données et l'alimentation électrique. De plus, chaque module 8 et 9 peut comporter un seul connecteur regroupant les fonctions de transmission de données et d'énergie électrique ou plusieurs connecteurs distincts, notamment un connecteur pour la transmission de données et un connecteur pour la transmission d'énergie électrique.

Le dispositif 1 comporte une goulotte 26 représentée sur la figure 2, qui est agencée sur la paroi 6 de l'aéronef, comme précisé ci-dessous. Cette goulotte 26 est configurée pour pouvoir recevoir une pluralité de modules de transmission 8. Pour ce faire, chacun des modules de transmission 8 présente notamment une taille et une forme telles qu'il puisse être introduit (monté) dans la goulotte 26. La goulotte 26 peut être un élément rapporté et fixé sur une surface de la paroi 6 ou un élément agencé dans un logement prévu à cet effet, par exemple en y étant vissé ou collé. De plus, la goulotte 26 est pourvue de trous 27, par exemple ronds, configurés pour laisser un accès aux connecteurs de la paroi 6 de sorte que les connecteurs des modules de transmission 8 puissent y être connectés. Cette goulotte 26 peut être réalisée en différents matériaux, et de préférence en plastique.

Dans une réalisation préférée de ce mode de réalisation particulier, représentée sur la figure 2, la goulotte 26 correspond à un élément allongé rectiligne présentant un profil, à savoir une section transversale, en forme de « U » carré (c'est-à-dire dont le fond n'est pas bombé mais droit), ouvert à ses extrémités longitudinales. En particulier, la goulotte 26 comporte un fond 28, des côtés latéraux 29 et 30 et une face ouverte 31. La face ouverte 31 comporte deux bords 32 et 33 correspondant à des prolongements orthogonaux des côtés latéraux 29 et 30, lesdits bords 32 et 33 ménageant entre eux une ouverture 34. L'ouverture 34 présente une forme rectangulaire s'étendant sur toute la longueur de la goulotte 26 et elle débouche aux extrémités longitudinales de ladite goulotte 26.

Le fond 28 de la goulotte 26 présente une face externe 35 (à savoir orientée vers l'extérieur de la forme en « U ») pouvant comporter des éléments de fixation afin de fixer ledit fond 28 sur la paroi 6, par exemple par visage ou collage. Le fond 28 comporte également les trous 27 qui sont des trous traversant permettant de connecter les modules de transmission 8 aux connecteurs (non représentés) de la paroi 6.

En outre, le dispositif 1 comporte au moins un cache 36 (figure 3) destiné à être agencé sur la goulotte 26 (figure 2). Le cache 36 est pourvu d'au moins une zone translucide apte à laisser passer les signaux lumineux émis par les unités de communication 2 et 3 de sorte que lesdites unités de communication 2 et 3 puissent échanger des données via ces signaux lumineux. En variante, le cache 36 peut également être transparent, au moins en partie.

Dans un mode de réalisation préféré, illustré sur la figure 3, le cache 36 est destiné à être agencé sur la goulotte 26 par des clips 40. Le cache 36 correspond à une plaquette 37 allongée, de préférence de faible épaisseur (de l'ordre du millimètre), de même longueur que la goulotte 26 et pourvue, sur l'une de ses faces, d'une surface 38 plane, et sur sa face opposée, d'une surface 39 pourvue de deux clips 40. La surface 38 est destinée à être orientée vers l'extérieur de la goulotte 26 tandis que la surface 39 est destinée à être orientée vers l'intérieur de la goulotte 26, le cache 36 étant fixé à la goulotte 26 au moyen des clips 40.

Dans le mode de réalisation représenté sur la figure 3, les clips 40 correspondent à deux formes extrudées sur toute la longueur du cache 36. Ces formes sont sensiblement orthogonales à la plaquette 37 du cache 36. De plus, les clips 40 sont pourvus, à leurs extrémités libres, de formes en crochet 41 aptes à coopérer élastiquement avec les bords 32 et 33 de la face ouverte 31 de la goulotte 26 de manière à pouvoir monter et démonter facilement le cache 36.

Dans un autre mode de réalisation, le cache 36 peut être fixé sur la goulotte 26 d'une manière différente, par exemple en étant glissé dans un rail (non représenté) agencé le long de ladite goulotte 26.

En outre, dans un mode de réalisation particulier (non représenté), le dispositif 1 peut comporter une pluralité de caches 36. En particulier, il peut comporter des caches 36 plus courts et répartis sur toute la longueur de la goulotte 26, chacun de ces caches 36 étant démontable individuellement.

En outre, au moins la plaquette 37 du cache 36 est réalisée dans un matériau translucide, par exemple un polymère thermoplastique, apte à permettre la transmission de signaux lumineux, notamment entre les modules de communication 8 et 9. Cependant, le cache 36 peut également comporter une plaquette 37 opaque pourvue d'une pluralité de zones translucides (ou transparentes), qui sont prévues au niveau de l'agencement des modules de transmission 8 et 9.

De plus, dans un mode de réalisation particulier, au moins une partie de la surface 38 du cache 36, destinée à être orientée vers l'extérieur, peut comporter des informations, par exemple des inscriptions ou des décorations sous forme de messages collées, dessinées ou gravées.

Dans un mode de réalisation particulier, le dispositif 1 peut comporter un autre cache (non représenté) destiné à être agencé sur le siège 7A au niveau du module de transmission 9 et présentant par exemple des caractéristiques similaires à celles du cache 36.

Par ailleurs, dans un mode de réalisation préféré, le dispositif 1 comporte un élément de protection (non représenté) destiné à empêcher un accès à l'espace situé entre les modules de transmission 8 et 9 et ainsi éviter une perturbation ou un empêchement de la transmission des signaux. L'élément de protection est destiné à être agencé entre la paroi 6 et le siège 7A et présente, de préférence, une forme étroite et allongée de manière à pouvoir être intercalé entre la paroi 6 et le siège 7A, et à couvrir tout ou partie de la longueur de la goulotte 26.

De préférence, l'élément de protection est fixé de manière amovible par des moyens de fixation usuels. De façon non limitative, l'élément de protection peut correspondre à une tablette rigide, par exemple en plastique, ou à une gaine souple, par exemple en caoutchouc.

Dans un mode de réalisation particulier, l'élément de protection correspond à un prolongement d'au moins l'un des côtés latéraux 29 et 30 de la goulotte 26 (figure 2). Ce prolongement s'étend depuis la goulotte 26 vers le siège 7A et permet donc d'empêcher l'accès à l'espace situé entre les modules de transmission 8 et 9. L'élément de protection peut également être fixé au siège 7A.

Dans un mode de réalisation particulier, représenté sur la figure 4, la paroi 6 de l'aéronef est composée d'une pluralité de sections de paroi assemblées ensemble. Chacune de ces sections de paroi correspond à un panneau 45 apte à être juxtaposé et assemblé à d'autres panneaux similaires afin de former la paroi 6.

Dans ce mode de réalisation, le panneau 45 comporte une partie supérieure 46, pourvue de hublots 47, et une partie inférieure 48. De plus, la goulotte 26 présente la même longueur que le panneau 45 et elle est agencée au niveau de l'interface entre la partie supérieure 46 et la partie inférieure 48 dudit panneau 45.

En outre, la goulotte 26 est configurée de sorte que, lorsque les panneaux sont assemblés pour former la paroi 6, elle est alignée avec les goulottes des panneaux adjacents.

Le dispositif 1 tel que décrit ci-dessus fait partie d'un système 50 de communication de données et d'alimentation électrique destiné à être intégré dans un aéronef AC (figure 6), et qui comporte au moins un tel dispositif 1.

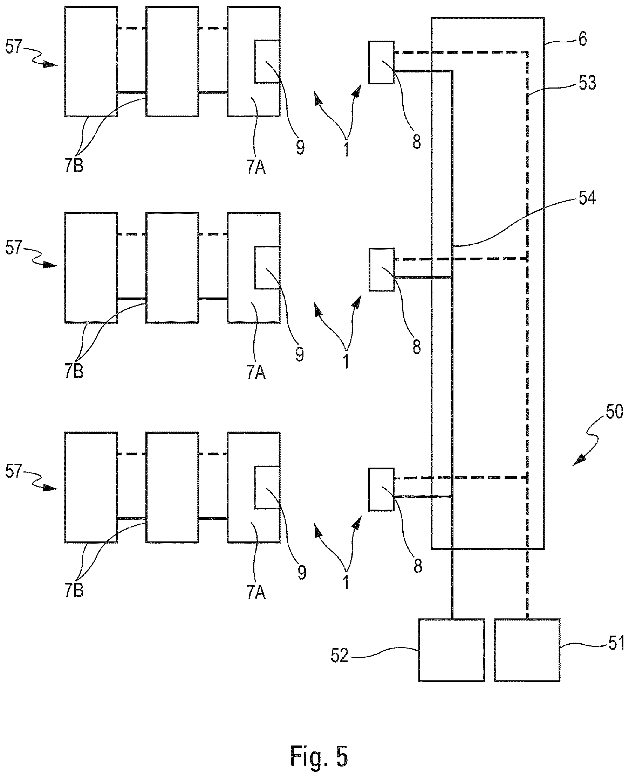

Dans le mode de réalisation représenté schématiquement sur la figure 5, le système 50 comporte une pluralité de dispositifs 1, ainsi qu'une unité de gestion de données 51 et une unité d'alimentation électrique 52. L'unité de gestion de données 51 est configurée pour gérer la communication des données des unités de communication 2 et 3 des dispositifs 1, et l'unité d'alimentation électrique 52 est configurée pour fournir une énergie électrique aux émetteurs à induction 4 des dispositifs 1.

Le système 50 comporte des liaisons 53 agencées dans la paroi 6 et permettant à l'unité de gestion de données 51 d'être reliée aux unités de communication 2 par l'intermédiaire des connecteurs (non représentés) de la paroi 6. Les liaisons 53 correspondent à des câbles usuels pour la communication de données, par exemple des câbles Ethernet ou optiques.

Le système 50 comporte également des liaisons 54 agencées dans la paroi 6 et permettant à l'unité de gestion d'alimentation électrique 52 d'être reliée aux émetteurs à induction 4 par l'intermédiaire des connecteurs (non représentés) de la paroi 6. Les liaisons 54 correspondent à des câbles électriques usuels pour l'alimentation électrique.

Dans un mode de réalisation préféré, représenté sur les figures 4 et 5, le système 50 est destiné à équiper une cabine 55 d'un aéronef, dont on a représenté une partie sur la figure 4, afin de communiquer des données aux sièges de ladite cabine 55 et leur fournir une énergie électrique. La cabine 55 correspond à au moins une partie de l'habitacle de l'aéronef, de préférence une partie destinée à recevoir des passagers, et elle comporte notamment un plancher 56, au moins une paroi 6 et au moins une rangées de sièges 57 comprenant un siège 7A agencé le long de la paroi 6 et au moins un autre siège dit auxiliaire 7B.

De préférence, la cabine 55 présente la configuration suivante :
- elle présente une direction longitudinale d'axe X-X ;
- elle comporte un couloir 58 rectiligne agencé au centre de la cabine 55, selon l'axe longitudinal X-X ;
- elle comporte une pluralité de rangées de sièges 57 orthogonales à l'axe X-X et agencées parallèlement entre elles, en deux colonnes de part et d'autre du couloir central 58 ;
- elle comporte deux parois 6, délimitant les côtés latéraux, à savoir de part et d'autre de l'axe X-X de la cabine 55, et contre lesquelles sont agencées les rangées de sièges 57, le siège 7A de chaque rangée de sièges 57 étant le siège accolé à l'une des deux parois 6 ; et
- elle comporte le système 50 comprenant les dispositifs 1 tels que celui décrit ci-dessus.

De plus, dans ce mode de réalisation, la rangée de sièges 57 comporte deux sièges auxiliaires 7B et un siège 7A. Ces sièges 7A et 7B sont liés entre eux de manière usuelle afin de former la rangée de sièges 57 et plus particulièrement, ils présentent des connexions et des liaisons usuelles entre eux permettant de communiquer des données et une alimentation électrique entre chacun des sièges 7A et 7B de la rangée de sièges 57. Cette communication de données et cette alimentation électrique sont réalisées depuis le siège le plus proche de la paroi 6, à savoir le siège 7A qui est le siège destiné à comporter le module de transmission 9, vers les sièges 7B. Concernant la communication de données entre les sièges 7A et 7B, celle-ci est bidirectionnelle.

Le système 50, tel que décrit ci-dessus, présente une grande flexibilité pour son installation et celle des rangées de sièges.

De plus, le système 50 est particulièrement adapté à une reconfiguration de la cabine 55 comprenant une modification de l'emplacement d'au moins une rangée de sièges 57. En effet, les dispositifs 1 du système 50 permettent de communiquer des données et de transmettre de l'énergie électrique entre les parois 6 et les rangées de sièges 57 sans contact, à savoir sans liaison physique entre eux. De plus, les modules de transmission 8, agencés dans les parois 6, peuvent être déplacés afin d'être positionnés à des positions souhaitées le long desdites parois 6. Par conséquent, il est possible de déplacer des rangées de sièges 57 selon la direction longitudinale X-X de la cabine 55, dans un sens ou dans l'autre, et d'adapter aisément la position des modules de transmission 8 associés, aux nouvelles positions des rangées de sièges 57.

Le système 50 de communication de données et d'alimentation électrique, tel que décrit ci-dessus, présente ainsi de nombreux avantages. En particulier :
- il permet de réaliser un plancher sans harnais pour la communication de données et l'alimentation électrique des sièges ;
- il permet une installation très flexible des rangées de sièges ;
- il permet de reconfigurer la cabine facilement et avec plus de flexibilité ;
- il permet de bénéficier d'une transmission de données à la fois rapide, sécurisée et sans interférences avec d'autres systèmes sans fil (Wi-Fi, Bluetooth, ...) ; et
- il évite la dépendance à d'autres types d'ondes telles que des ondes Wi-Fi.

## Revendications

1. Dispositif de communication de données et d'alimentation électrique, en particulier pour un aéronef, ledit dispositif (1) comportant :
- une première unité de communication (2) destinée à être agencée dans une paroi (6) de l'aéronef et une seconde unité de communication (3) destinée à être agencée dans un siège (7A), lesdites première et seconde unités de communication (2, 3) étant aptes à coopérer ensemble afin de communiquer des données par lumière visible ;
- un émetteur à induction (4) destiné à être agencé dans une paroi (6) de l'aéronef et un récepteur à induction (5) destiné à être agencé dans un siège (7), ledit émetteur (4) et ledit récepteur (5) étant aptes à coopérer ensemble afin de transmettre une alimentation électrique par induction ;
- un premier module de transmission (8) correspondant à un bloc structurel et comprenant la première unité de communication (2) et l'émetteur à induction (4) ;
- un second module de transmission (9) correspondant à un bloc structurel et comprenant la seconde unité de communication (3) et le récepteur à induction (5) ; et
- au moins une goulotte (26) destinée à être agencée sur une paroi (6) de l'aéronef (AC), ladite goulotte (26) étant configurée pour pouvoir recevoir une pluralité de premiers modules de transmission (8),
**caractérisé en ce que** la première unité de communication (2) comporte un premier ensemble (18) et un second ensemble (19) comprenant chacun au moins une microdiode électroluminescente (14, 20) et au moins un photorécepteur (15, 21), et la seconde unité de communication (3) comporte un premier ensemble (22) et un second ensemble (23) comprenant chacun au moins une microdiode électroluminescente (16, 25) et au moins un photorécepteur (17, 24), lesdits premiers ensembles (18, 22) et lesdits seconds ensembles (19, 23) étant configurés pour pouvoir fonctionner d'au moins l'une des manières suivantes :
- les premiers ensembles (18, 22) sont destinés au fonctionnement des première et seconde unités de communication (2, 3) dans un contexte habituel, tandis que les seconds ensembles (19, 23) sont destinés à une fonction de redondance ; dans un mode de fonctionnement normal seuls les premiers ensembles (18, 22) fonctionnant tandis que les seconds ensembles (19, 23) sont en veille et dans un mode de défaillance, où au moins l'un des premiers ensembles (18, 22) ne fonctionne pas correctement, les seconds ensembles (19, 23) étant mis en fonctionnement ; et
- les premiers ensembles (18, 22) et les seconds ensembles (19, 23) de la première unité de communication (2) et de la seconde unité de communication (3) fonctionnent simultanément.

2. Dispositif selon de la revendication 1, **caractérisé en ce que** la goulotte (26) est agencée sur la paroi (6) de l'aéronef (AC), ladite paroi (6) délimitant un côté latéral d'une cabine (55) dudit aéronef (AC).

3. Dispositif selon l'une quelconque des revendications 1 à 2, **caractérisé en ce que** la goulotte (26) comporte une pluralité de connecteurs agencés le long de ladite goulotte (26), chaque connecteur étant configuré pour qu'au moins un premier module de transmission (8) puisse y être connecté.

4. Dispositif selon l'une quelconque des revendications 1 à 3, **caractérisé en ce qu'**il comporte au moins un cache (36) pourvu d'au moins une zone translucide, et configuré pour pouvoir être monté sur la goulotte (26).

5. Dispositif selon la revendication **4, caractérisé en ce que** le cache (36) est configuré pour être monté sur la goulotte (26) par des clips (40).

6. Dispositif selon l'une quelconque des revendications 1 à 5, **caractérisé en ce qu'**il comporte un élément de protection (42) configuré pour empêcher un accès à un espace situé entre le premier module de transmission (8) et le second module de transmission (9).

7. Système de communication de données et d'alimentation électrique, en particulier pour un aéronef, **caractérisé en ce qu'**il comporte ;
- au moins un dispositif (1) selon l'une quelconque des revendications 1 à 6 ;
- au moins une unité de gestion de données (51) apte à gérer la communication des données des unités de communication (2, 3) ; et
- au moins une unité d'alimentation électrique (52) apte à fournir une énergie électrique au ou aux émetteurs à induction (4).

8. Aéronef, **caractérisé en ce qu'**il comporte au moins un dispositif (1) selon l'une quelconque des revendications 1 à 6 et/ou au moins un système (50) selon la revendication 7

## Patentansprüche

1. Vorrichtung zur Datenkommunikation und Stromversorgung, insbesondere für ein Flugzeug, wobei die Vorrichtung (1) umfasst:
- eine erste Kommunikationseinheit (2), die dazu bestimmt ist, in einer Wand (6) des Flugzeugs angeordnet zu werden, und eine zweite Kommunikationseinheit (3), die dazu bestimmt ist, in einem Sitz (7A) angeordnet zu werden, wobei die erste und zweite Kommunikationseinheit (2, 3) imstande sind, zusammenzuwirken, um Daten über sichtbares Licht zu kommunizieren;
- einen Induktionssender (4), der dazu bestimmt ist, in einer Wand (6) des Flugzeugs angeordnet zu werden, und einen Induktionsempfänger (5), der dazu bestimmt ist, in einem Sitz (7) angeordnet zu werden, wobei der Sender (4) und der Empfänger (5) imstande sind, zusammenzuwirken, um eine Stromversorgung durch Induktion zu übertragen;
- ein erstes Übertragungsmodul (8), das einem Strukturblock entspricht und die erste Kommunikationseinheit (2) und den Induktionssender (4) umfasst;
- ein zweites Übertragungsmodul (9), das einem Strukturblock entspricht und die zweite Kommunikationseinheit (3) und den Induktionsempfänger (5) umfasst; und
- mindestens einen Kanal (26), der dazu bestimmt ist, an einer Wand (6) des Flugzeugs (AC) angeordnet zu werden, wobei der Kanal (26) konfiguriert ist, um eine Vielzahl von ersten Übertragungsmodulen (8) aufnehmen zu können,
**dadurch gekennzeichnet, dass** die erste Kommunikationseinheit (2) eine erste Anordnung (18) und eine zweite Anordnung (19) umfasst, die jeweils mindestens eine Mikroleuchtdiode (14, 20) und mindestens einen Photorezeptor (15, 21) umfassen, und die zweite Kommunikationseinheit (3) eine erste Anordnung (22) und eine zweite Anordnung (23) umfasst, die jeweils mindestens eine Mikroleuchtdiode (16, 25) und mindestens einen Photorezeptor (17, 24) umfassen, wobei die ersten Anordnungen (18, 22) und die zweiten Anordnungen (19, 23) konfiguriert sind, um auf mindestens eine der folgenden Arten betrieben werden zu können:
- die ersten Anordnungen (18, 22) sind zum Betreiben der ersten und zweiten Kommunikationseinheit (2, 3) in einem gewöhnlichen Kontext bestimmt, während die zweiten Anordnungen (19, 23) für eine Redundanz-Funktion bestimmt sind; in einem normalen Betriebsmodus, werden nur die ersten Anordnungen (18, 22) betrieben, während die zweiten Anordnungen (19, 23) im Stand-by stehen, und in einem Ausfallmodus, bei dem mindestens eine der ersten Anordnungen (18, 22) nicht korrekt funktioniert, werden die zweiten Anordnungen (19, 23) in Betrieb genommen; und
- die ersten Anordnungen (18, 22) und die zweiten Anordnungen (19, 23) der ersten Kommunikationseinheit (2) und der zweiten Kommunikationseinheit (3) sind gleichzeitig in Betrieb.

2. Vorrichtung nach Anspruch 1,
**dadurch gekennzeichnet, dass** der Kanal (26) an der Wand (6) des Flugzeugs (AC) angeordnet ist, wobei die Wand (6) eine laterale Seite einer Kabine (55) des Flugzeugs (AC) begrenzt.

3. Vorrichtung nach einem der Ansprüche 1 bis 2,
**dadurch gekennzeichnet, dass** der Kanal (26) eine Vielzahl von Verbindern umfasst, die entlang des Kanals (26) angeordnet sind, wobei jeder Verbinder konfiguriert ist, damit mindestens ein erstes Übertragungsmodul (8) damit verbunden werden kann.

4. Vorrichtung nach einem der Ansprüche 1 bis 3,
**dadurch gekennzeichnet, dass** sie mindestens eine Abdeckung (36) umfasst, die mit mindestens einer durchscheinenden Zone versehen, und konfiguriert ist, um am Kanal (26) montiert werden zu können.

5. Vorrichtung nach Anspruch 4,
**dadurch gekennzeichnet, dass** die Abdeckung (36) konfiguriert ist, um durch Clips (40) am Kanal (26) montiert zu werden.

6. Vorrichtung nach einem der Ansprüche 1 bis 5,
**dadurch gekennzeichnet, dass** sie ein Schutzelement (42) umfasst, das konfiguriert ist, um einen Zugriff zu einem Raum zu verhindern, der sich zwischen dem ersten Übertragungsmodul (8) und dem zweiten Übertragungsmodul (9) befindet.

7. System zur Datenkommunikation und Stromversorgung, insbesondere für ein Flugzeug, **dadurch gekennzeichnet, dass** es umfasst;
- mindestens eine Vorrichtung (1) nach einem der Ansprüche 1 bis 6;
- mindestens eine Datenverwaltungseinheit (51), die imstande ist, die Kommunikation der Daten der Kommunikationseinheiten (2, 3) zu verwalten; und
- mindestens eine Stromversorgungseinheit (52), die imstande ist, dem oder den Induktionssender(n) (4) elektrische Energie bereitzustellen.

8. Flugzeug,
**dadurch gekennzeichnet, dass** es mindestens eine Vorrichtung (1) nach einem der Ansprüche 1 bis 6 und/oder mindestens ein System (50) nach Anspruch 7 umfasst.

## Claims

1. A data communication and electric power supply device, in particular for an aircraft, said device (1) comprising:
- a first communication unit (2) intended to be arranged in a wall (6) of the aircraft and a second communication unit (3) intended to be arranged in a seat (7A), said first and second communication units (2, 3) being able to cooperate with one another in order to communicate data by means of visible light;
- an inductive transmitter (4) intended to be arranged in a wall (6) of the aircraft and an inductive receiver (5) intended to be arranged in a seat (7), said transmitter (4) and said receiver (5) being able to cooperate with one another in order to transmit electric power by means of induction;
- a first transmission module (8) corresponding to a structural block and comprising the first communication unit (2) and the inductive transmitter (4); and
- a second transmission module (9) corresponding to a structural block and comprising the second communication unit (3) and the inductive receiver (5); and
- at least one raceway (26) intended to be arranged on a wall (6) of the aircraft (AC), said raceway (26) being configured to be able to accommodate a plurality of first transmission modules (8),
**characterized in that** the first communication unit (2) comprises a first assembly (18) and a second assembly (19) each comprising at least one micro-light-emitting diode (14, 20) and at least one photoreceptor (15, 21), and the second communication unit (3) comprises a first assembly (22) and a second assembly (23) each comprising at least one micro-light-emitting diode (16, 25) and at least one photoreceptor (17, 24), said first and second assemblies (18, 22) and said second assemblies (19, 23) being configured to operate according to at least one of the following ways:
- the first assemblies (18, 22) are intended for operation of the first and second communication units (2, 3) in a standard context, while the second assemblies (19, 23) are intended for a redundancy function; in a normal operating mode only the first assemblies (18, 22) operate while the second assemblies (19, 23) are on standby and in a failure mode, wherein at least one of the first assemblies (18, 22) is not operating correctly, the second assemblies (19, 23) are brought into operation, and
- the first assemblies (18, 22) and the second assemblies (19, 23) of the first communication unit (2) and of the second communication unit (3) operate simultaneously.

2. The device as claimed in claim 1,
**characterized in that** the raceway (26) is arranged in the wall (6) of the aircraft (AC), said raceway (26) delimiting a lateral side of a cabin (55) of said aircraft (AC).

3. The device as claimed in one of claims 1 and 2,
**characterized in that** the raceway (26) comprises a plurality of connectors which are arranged along said raceway (26), each connector being configured so that at least one first transmission module (8) may be connected thereto.

4. The device as claimed in any one of claims 1 to 3,
**characterized in that** it comprises at least one cover (36) provided with at least one translucent zone and configured to be able to be mounted on the raceway (26).

5. The device as claimed in claim 4,
**characterized in that** the cover (36) is configured to be mounted on the raceway (26) by means of clips (40).

6. The device as claimed in any one of claims 1 to 5,
**characterized in that** it comprises a protective element (42) configured to prevent access to a space situated between the first transmission module (8) and the second transmission module (9).

7. A data communication and electric power supply system, in particular for an aircraft, **characterized in that** it comprises:
- at least one device (1) as claimed in any one of claims 1 to 6;
- at least one data management unit (51) which is able to manage the data communication of the communication units (2, 3); and
- at least one electric power supply unit (52) which is able to deliver electrical energy to the one or more inductive transmitters (4).

8. An aircraft,
**characterized in that** it comprises at least one device (1) as claimed in any one of claims 1 to 6 and/or at least one system (50) as claimed in claim 7.
